# EUROPÄISCHE PATENTSCHRIFT

(11) **EP 0 973 473 B1**
(45) Veröffentlichungstag und Bekanntmachung des Hinweises auf die Patenterteilung: **26.03.2003**
(21) Anmeldenummer: 98921453.1
(22) Anmeldetag: 09.04.1998
(51) Int. Cl.: A61G 3/08, B60P 7/08

(54) **VORRICHTUNG ZUM ZEITWEILIGEN VERBINDEN EINES ZURRGURTES MIT EINEM ANKERPUNKT**
DEVICE FOR PROVISIONALLY CONNECTING A FASTENING STRAP TO AN ANCHOR POINT
DISPOSITIF POUR LE RACCORDEMENT PROVISOIRE D'UNE SANGLE D'ARRIMAGE A UN POINT D'ANCRAGE

(30) Priorität: 09.04.1997 DE 29706258 U; 26.11.1997 DE 19752256
(43) Veröffentlichungstag der Anmeldung: 26.01.2000
(73) Patentinhaber: ANCRA Jungfalk GmbH & Co. KG, 78234 Engen (DE)
(72) Erfinder: KOLLER, Karl, CH-8260 Stein am Rhein (CH)
(74) Vertreter: Behrmann, Niels, Dipl.-Ing.
(86) Internationale Anmeldenummer: EP9802094
(87) Internationale Veröffentlichungsnummer: WO98044887

(56) Entgegenhaltungen:
- WO-A-89/09588
- DE-U- 1 890 983
- FR-A- 1 161 214
- US-A- 3 367 000
- US-A- 3 709 156
- US-A- 3 765 637
- US-A- 3 831 532
- US-A- 4 966 392

## Beschreibung

Die Erfindung betrifft eine Vorrichtung zum zeitweiligen Verbinden eines Zurrgurtes -- insbesondere eines Gurtes an einem Rollstuhl -- mit einem Ankerpunkt nach dem Oberbegriff des Patentanspruches 1.

Es sind verschiedene Ausführungen von rollstuhlgerechten Kastenaufbauten bekannt, in denen der -- über Auffahrschienen eingebrachte -- Rollstuhl mit Zurrgurten an Punktverankerungen oder in Halteschienen befestigt wird. Die diesbezüglichen Zurrgurte sind stuhlnahe mit sogenannten Retraktoren ausgestattet, welche über verhältnismäßig lange Seilstränge an die Rastkörper angeschlossen werden. Als nachteilig hat sich dabei gezeigt, daß die an die unverhältnismäßig schweren Retraktoren angeschlossenen Seilstränge durch häufiges Drehen sich unerwünscht verdrillen sowie leicht brüchig werden.

Die FR-A-1161214 offenbart eine Befestigungspaarung aus einer rinnenartigen Halteschiene mit seitlich abkragenden Rinnenrändern und in diese eingeformten Schlitzpaaren für eine auf ihr verschiebliche Querplatte, deren querschnittlich abwärts gekrümmten Seitenbereiche jene Rinnenränder haltend mit Spiel umgreifen. Auf dieser Querplatte wird eine zu ihr relativ bewegbare und in Längsschnitt U-förmige Längsplatte gehalten, die mit ihren freien Schenkeln in jene Schlitzpaare einrasten kann. Beide Platten werden von einem i. w. zentrischen Bolzen durchsetzt, den eine sich auf der Längsplatte abstützende Schraubenfeder umfängt und an dem eine Öse schwenkbar angelenkt ist.

Nach der US-A-3765637 greifen seitliche, in einer gemeinsamen Achse liegende Bolzenstümpfe einer durch sie drehbar gelagerten Ösenplatte beidseits in Ausnehmungen einer Kappe ein, die drehbar auf einem Schubkörper einer Halteschiene lagert. Dieser Schubkörper greift mit beidseits vorgesehenen tellerartigen Ausformungen in die Längsnut einer Halteschiene ein, wobei die Ausformungen in einer Rastscellung hinterschnittene Bereiche der Halteschiene untergreifen.

Durch die WO-A-9809588 schließlich ist es an sich bekannt, einem Spanngehäuse ein Kupplungselement für einen Zurrgut eines Rollstuhls zuzuordnen.

Aufgabe der Erfindung ist es daher, das Verbinden eines Rollstuhls mit einem Ankerpunkt oder einer Halteschiene zu verbessern; vor allem sollen Verdrillsicherheit und hohe Standzeiten gewährleistet werden.

Die Aufgabe wird durch die Vorrichtung mit den Merkmalen des Patentanspruches 1 gelöst; vorteilhafte Weiterbildungen der Erfindung sind in den Unceransprüchen beschrieben.

Erfindungsgemäß ist die oberhalb des in der Halteschiene verankerbaren Anschlußkörpers ihm benachbarte Drehstelle für den Zurrgurt in sehr kurzem Abstand zur Halteschiene angeordnet; ein am Anschlußkörper angeordnetes, die Drehstelle aufweisendes Kugelgelenk ist einerseits mit dem Anschlußkörper sowie anderseits mit dem Zurrgurt verbunden. Zudem soll dieses Kugelgelenk eine gurtwärtige Lagerkalotte enthalten, die in einer Lagerschale des Anschlußkörpers drehbar ist.

Nach einem weiteren bevorzugten Merkmal der Erfindung ragt die etwa zylindrische Lagerschale des Kugelgelenks, in der jene dem Zurrgurt zugeordnete Lagerkalotte drehbar ruht, vom Anschlußkörper auf; der an der Lagerkalotte angeordnete, die Schalenmündung der Lagerschale umgebende Schalenrand der Lagerschale soll zudem querschnittlich einwärts gekrümmt sein, um die Lagerkalotte haltend zu übergreifen.

Bei einer Vorrichtung mit zwischen Zurrgurt und Halteschiene verlaufendem Seilstrang ist gemäß einer Ausführungsform der Erfindung an die Lagerkalotte eine Anschlußhülse für ein kurzes Zugseilstück angeformt, das andernends mit einem Spanngehäuse bzw. mit einem Gelenkteil verbunden ist. Dieses -- bevorzugt durch eine Ummantelung geschützte -- Zugseilstück endet am Spanngehäuse in einer büchsenartigen Anformung einer Lagerplatte und ist mit dieser durch einen Achsstift an Lagerlaschen des Spanngehäuses angeschlossen; Lagerplatte und Lägerlaschen sind durch den Achsstift vorteilhafterweise starr verbunden.

Zur Erhöhung der Drillsicherheit soll zudem der Abstand zwischen dem Achsstift und der Lagerkalotte etwa dem vierfachen Abstand der Drehebene der Lagerkalotte von der Unterfläche der angeschlossenen Halteschiene entsprechen, der seinerseits etwa der vierfachen Höhe der angeschlossenen Halteschiene entspricht, die bevorzugt etwa 10 mm mißt. Die Abstände liegen also im Bereich weniger Zentimeter.

Als günstig hat sich auch erwiesen, die Einheit aus Lagerkalotte und Anschlußhülse mit einer Schutzmanschette zu versehen, die mit einem sich endwärts erweiternden Abschnitt dem Rand der Lagerschale aufsitzt und deren die Lagerkalotte aufnehmende Schalenmündung -- diese schützend -abdeckt.

An dem mit der Lagerhülse durch einen Nietbolzen verbundenen Anschlußkörper soll stirnseitig ein Sperrbolzen bewegbar lagern, der gegen einen Kraftspeicher aus einer Rastausnehmung der Halteschiene herausgenommen werden kann. Dieser Sperrbolzen wird in einem dem Anschlußstück angeformten Bugstück rechtwinkelig zur Halteschiene sicher geführt.

Es ergeben sich insbesondere die nachfolgenden Vorteile gegenüber bekannten Zurrsystemen für Rollstühle:
. ein tiefliegender Drehpunkt, verbunden mit minimalen Hebelkräften, die in die Bodenverankerung eingeleitet werden;
. eine gleichmäßige Krafteinleitung in den Anschlußkörper über die Lagerschale des Kugelgelenks bei unterschiedlichen Verzurrpositionen des Rollstuhls im Transportmittel;
. eine günstige Dreh- und Schwenkbarkeit über das Kugelgelenk, das kurze Zugseilstück wird bestmöglich gegen Beanspruchungen wie Torsion und Biegung geschützt;
. formschlüssige Aufnahme der Lagerschale im Anschlußkörper;
. Schutz des Kugelgelenks durch die Manschette oder Kunststoffkappe gegen Verschmutzung.

Zudem kann die erfindungsgemäße Vorrichtung auch bei anderen Zurrlasten vorteilhafte Anwendung finden.

Weitere Vorteile, Merkmale und Einzelheiten der Erfindung ergeben sich aus der nachfolgenden Beschreibung bevorzugter Ausführungsbeispiele sowie anhand der Zeichnungen; diese zeigen in
- Fig. 1:: eine Schrägsicht auf einen Rollstuhl, der durch Zurrelemente mit seitlichen Halteschienen einer Ladefläche verbundenen ist;
- Fig. 2:: eine Seitenansicht eines Rollstuhls mit erfindungsgemäßem Rückhaltesystem;
- Fig. 3:: die Draufsicht auf eine Halteschiene der Fig. 2;
- Fig. 4:: den vergrößerten Querschnitt durch die Halteschiene der Fig. 3 nach deren Linie IV-IV;
- Fig. 5:: eine gegenüber Fig. 2 vergrößerte Seitenansicht eines Zurrelements;
- Fig. 6:: die Frontansicht des Zurrelements mit Spanngehäuse;
- Fig. 7:: den vergrößerten Schnitt durch eine in Fig. 5, 6 erkennbare Kupplungseinheit;
- Fig. 8:: den vergrößerten Schnitt durch Fig. 6 nach deren Linie VIII-VIII;
- Fig. 9:: eine gegenüber Fig. 2 vergrößerte Seitenansicht eines Zurrelements mit Kupplungseinheit;
- Fig. 10:: die Frontansicht des Spanngehäuses;
- Fig. 11,12:: die vergrößerte Kupplungseinheit der Fig. 9, 10 in unterschiedlichen Stellungen.

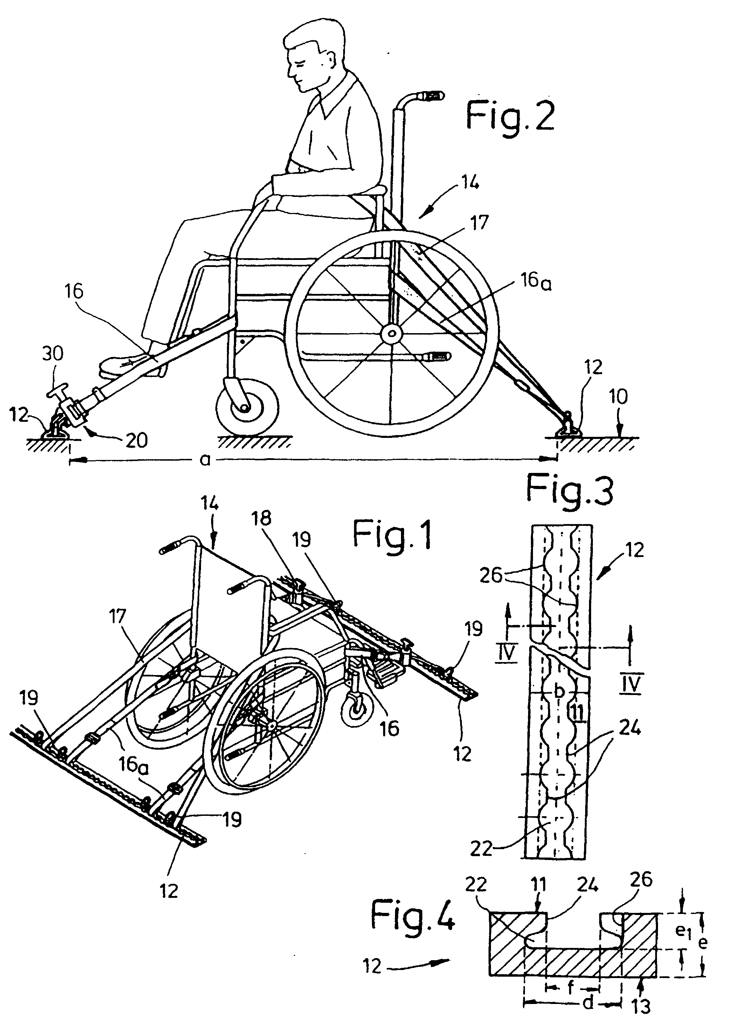

Auf die Ladefläche 10 eines nicht weiter dargestellten Transportfahrzeuges sind in Abstand a voneinander parallele Halteschienen 12 -- einer Breite b von beispielsweise 34 mm bei einer Höhe e von etwa 12 mm -- mit ihrer unteren Montagefläche 13 aufgesetzt sind zum zeitweiligen Festlegen eines Rollstuhls 14 mittels zweier Frontgurte 16 und zweier hinterer Spanngurte 16ₐ -- mit darüber zugeordnetem Beckengurt 17 -- vorgesehen. Zum Spannen und Lösen des Frontgurtes 16 ist an diesen in Fig. 1 in Abstand zur Halteschiene 12 ein sog. Retraktor 18 angefügt und mit einem längeren Seil an einen Rastkörper 19 angeschlossen, der in einer der Halteschienen 12 sitzt.

Die Gurte 16, 16ₐ, 17 werden in der Ausführung nach Fig. 2 bis 8 mittels -- an sie endwärts angeschlossenen --Fittings oder Spannschlösser 20 in der Halteschiene 12 dank einer hinterschnittenen Längsnut 22 der Tiefe e₁ von etwa 8 mm lösbar festgelegt; der Rollstuhl 14 wird so durch die beiden längenveränderlichen Gurtpaare 16, 16ₐ rüttelfrei verspannt, da diese mit dem Beckengurt 17 die auftretenden Kräfte übernehmen.

Die beiden -- den in der Schienenoberfläche 11 liegenden schlitzartigen Bereich der Längsnut 22 seitlich begrenzenden -- Nutenränder 24 des Abstandes f von 12 mm sind in Fig. 3, 4 durch in Draufsicht teilkreisförmige Konturen 26 des Durchmessers d von hier 20 mm wellenartig gestaltet. Derartige Halteschienen 12 werden -- vor allem in Form von Zurrschienen in Flugzeugen -- als sog. Airline-Systeme eingesetzt.

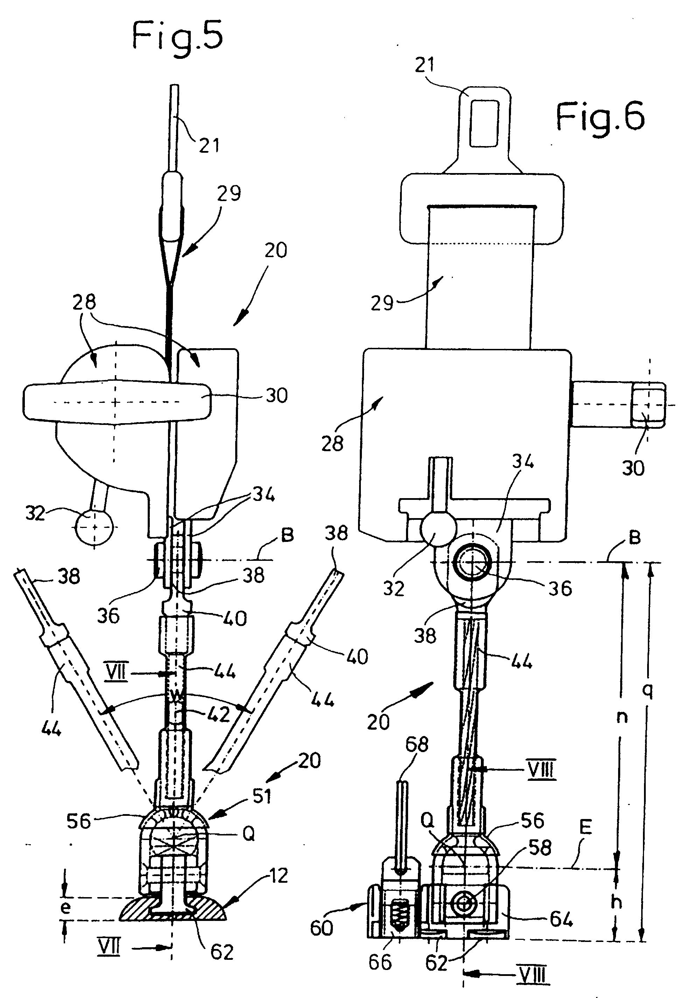

Insbesondere gemäß Fig. 5, 6 und 9, 10 weist das erfindungsgemäße Spannschloß 20 -- beispielsweise als Teil des Frontgurtes 16 -- ein Spanngehäuse 28 mit seitlichem Drehgriff 30 für eine in ihm untergebrachte, nicht weiter dargestellte Spanneinrichtung des Frontgurtes 16 auf, der an das Spanngehäuse 28 durch eine Kupplungszunge 21 einer Gurtschlaufe 29 lösbar angefügt werden kann. Frontseitig ragt aus dem Spanngehäuse 28 ein radialer Lösehebel 32 ab.

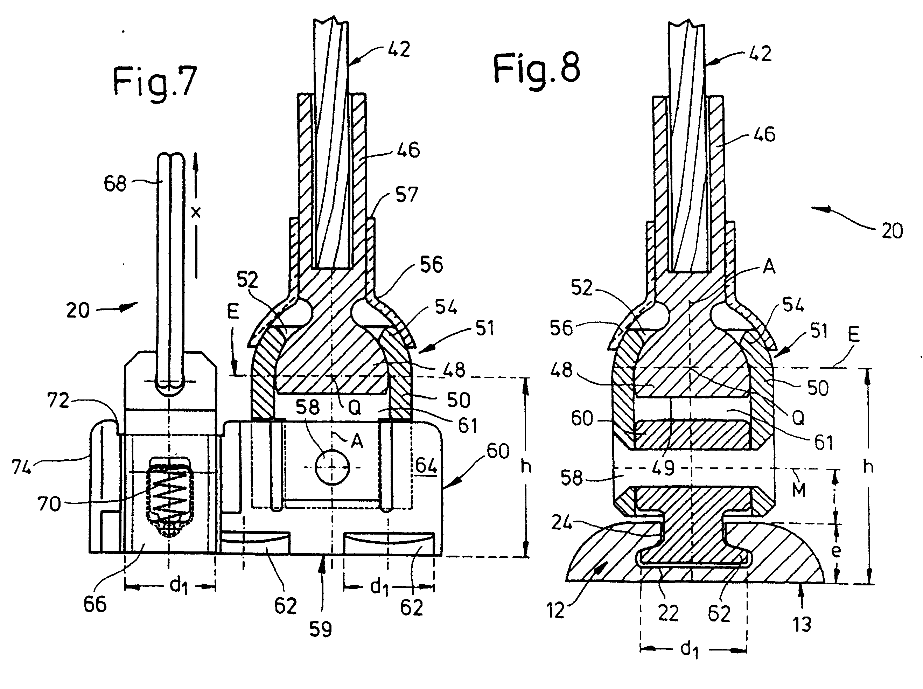

Zwei parallele Lagerlaschen 34 des Spanngehäuses 28 sind durch einen Achsstift 36 mit einer Lagerplatte 38 verbunden, die ihrerseits -- in den Fig. 5 bis 8 -- mit einer büchsenartigen Anformung 40 an ein verhältnismäßig steifes kurzes Zugseilstück 42 angeschlossen ist. Das schienenwärtige Ende des insgesamt von einem Hüllschlauch 44 umgebenen, eine flexible peitschenstockartige Einheit 42/44 darstellenden Zugseilstücks 42 sitzt -- wie in Fig. 7, 8 zu sehen -- in einer Anschlußhülse 46, die an eine Lagerkalotte 48 angeformt ist.

Der Konstruktionsmittelpunkt der Lagerkalotte 48 ist der besseren Übersicht halber mit Q bezeichnet und bestimmt eine Drehebene E für ein aus jener Lagerkalotte 48 und einer sie aufnehmenden zylindrischen Lagerschale 50 bestehendes Kugelgelenk 51. Für die Lagebestimmung der Lagerkalotte 48 ist der die Schalenmündung 52 umgebende Schalenrand 54 zur Längsachse A hin teilkugelförmig einwärts gekrümmt. Dank dieser Lagerung ist die Lagerkalotte 48 -- und mit ihr die Peitschenstockeinheit 42/44 -- um jenen Konstruktionsmittelpunkt Q gemäß Fig. 5 in einem Schwenkwinkel w von etwa 60° schwenkbar. Im übrigen beträgt der Abstand n zwischen Konstruktionsmittelpunkt Q und der Achse B des vom Achsstift 36 durchsetzten Ösenlochs in den Lagerplatten 38 hier etwa 90 mm.

Dem Rand 54 liegt das freie Ende einer die Anschlußhülse 46 umfangenden sowie die vom Rand 54 begrenzte Schalenmündung 52 abdeckenden, sich abwärts erweiternden Schutzmanschette 56 aus flexiblem Werkstoff an.

Ein Nietbolzen 58, der zum einen die etwa zylindrische Lagerschale 50 sowie zum anderen einen in die Halteschiene 12 einsetzbaren, in der Lagerschale 50 lagernden quaderartigen Anschlußkörper 60 durchsetzt, bestimmt eine Bolzenachse M, deren Abstand i von der Halteschiene 12 etwa deren Höhe e entspricht. Der Abstand h der Unterfläche 59 dieses Anschlußkörpers 60 zu jenem Konstruktionsmittelpunkt Q mißt hier 21 mm.

Der Anschlußkörper 60 steht in einem Spaltabstand 61 zur Fußebene 49 der Lagerkalotte 48 und ist in seinem unteren Bereich beidseits mit jeweils zwei tellerartigen Ausformungen 62 versehen, die mit in Draufsicht teilkreisförmigen Bereichen von den Längsflächen 64 des Anschlußkörpers 60 abragen; der Durchmesser d₁ der tellerartigen Ausformungen 62 ist -- wie Fig. 8 verdeutlicht -- geringfügig kürzer als der Durchmesser d der Kreiskontur 26 der Längsnut 22; jeweils zwei benachbarte Kreiskonturen 26 können die beiden tellerartigen Ausformungen 62 des Anschlußkörpers 60 aufnehmen; dieser ist nach dem Absenken in die Ausformungen 62 in der Längsnut 22 verschiebbar.

Am Anschlußkörper 60 des Spannschlosses 20 ist -- wie aus Fig. 6, 7 ersichtlich -- ein mit der Halteschiene 12 zusammenwirkender Sperrbolzen 66 des Durchmessers d₁ angebracht, der in Sperrstellung in eine der Kreiskonturen 26 der Halteschiene 12 taucht und durch Zug an einer Grifflasche 68 in Pfeilrichtung x entriegelt wird; hierbei wird der Sperrbolzen 66 axial gegen eine Schraubenfeder 70 als Kraftspeicher aus seinem von der kreisförmigen Kontur 26 der Halteschiene 12 gebildeten Rastlager herausgehoben, wonach die Ausformungen 62 ihrerseits aus ihren dann jeweils im engen

Bereich zwischen zwei kreisförmigen Konturen 26 befindlichen Sitzen durch Verschieben in der Längsnut 22 entfernt werden können. Der Sperrbolzen 66 weist einen -- nicht verdeutlichten -- diametralen Schlitz auf, der an einer flossenartigen Mittelwand 72 eines an den Anschlußkörper 60 angeformten Bugstückes 74 geführt ist.

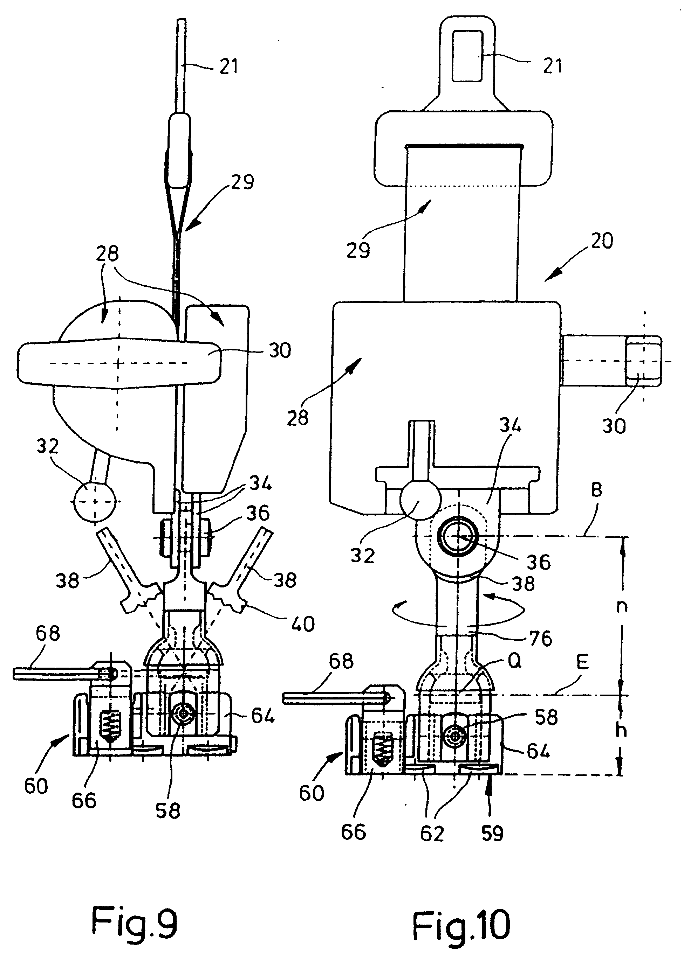

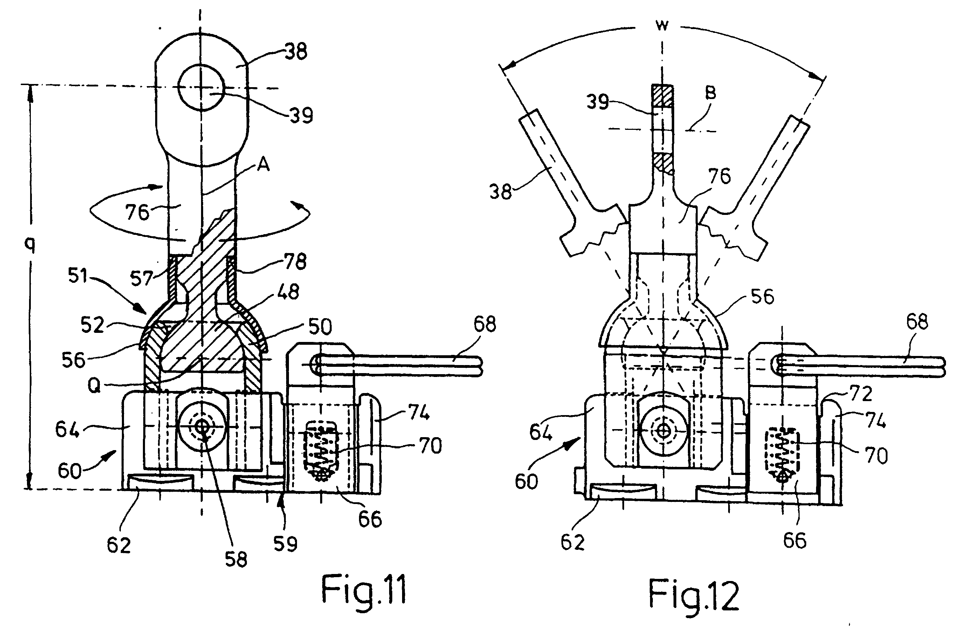

Bei der Ausführung nach Fig. 9 bis 12 ist statt jenes Zugseilstückes 42 an die Lagerkalotte 48 ein Hals 76 angeformt und mit einem schulterartigen Ringabsatz 78 versehen, an den die Oberkante 57 der Manschette 56 anschlägt. Der Hals 76 geht in die als Öse ausgebildete Lagerplatte 38 einstückig über; der Abstand n der Achse B des Ösenloches 39 der Lagerplatte 38 zur Drehebene E mißt hier 44 mm und deren Abstand h zur Unterfläche 59 des Anschlußkörpers 60 etwa 21 mm, der Schwenkwinkel w 70° bzw. 90°. Es wird deutlich, daß hier ein erheblich engerer Gesamtabstand q von 65 mm jener Achse B zur Unterfläche 59 entsteht gegenüber einem Gesamtabstand q von 110 mm beim Ausführungsbeispiel mit Zugseilstück 42.

## Patentansprüche

1. Vorrichtung zum zeitweiligen Verbinden eines Zurrgurtes (16, 16ₐ, 17), insbesondere eines Gurtes an einem Rollstuhl, mit einem Ankerpunkt, wobei oberhalb eines in einer Halteschiene (12), insbesondere in einer eine Längsnut (22) aufweisenden Halteschiene (12), verriegel- und lösbar einsetzbaren Anschlußkörpers (60) eine der Halteschiene benachbarte Drehstelle (Q) für den Zurrgurt (16, 16ₐ, 17) angeordnet und dieser sowohl um die Drehstelle in einem Drehwinkel drehbar als auch an ihr in einem Schwenkwinkel (w) schwenkbar ist,
**dadurch gekennzeichnet,**
**dass** am Anschlußkörper (60) ein die Drehstelle (Q) aufweisendes Kugelgelenk (51) angeordnet und dieses einerseits mit dem Anschlußkörper sowie andererseits mit dem Zurrgurt (16, 16ₐ, 17) verbunden ist.

2. Vorrichtung nach Anspruch 1, **dadurch gekennzeichnet, dass** das Kugelgelenk (51) eine gurtseitige Lagerkalotte (48) aufweist, die in einer Lagerschale (50) des Anschlusskörpers (60) drehbar gelagert ist.

3. Vorrichtung nach Anspruch 2, **gekennzeichnet durch** eine vom Anschlusskörper (60) aufragende zylindrische Lagerschale (50) mit eine Schalenmündung (52) umgebendem, querschnittlich einwärts gekrümmten Schalenrand (54).

4. Vorrichtung nach Anspruch 2 oder 3, **dadurch gekennzeichnet, dass** die Lagerkalotte (48) des Kugelgelenks (51) mit einem Gelenkteil (38) durch ein Zugseilstück (42) verbunden ist.

5. Vorrichtung nach Anspruch 2 oder 3, **dadurch gekennzeichnet, dass** an die Lagerkalotte (48) des Kugelgelenks (51) ein Hals (76) angeformt und dieser mit einem gurtseitigen Gelenkteil (38) einstückig ist.

6. Vorrichtung nach einem der Ansprüche 2 bis 5, **dadurch gekennzeichnet, dass** die eine Drehebene (E) bestimmende Drehstelle (Q) Konstruktionsmittelpunkt der Lagerkalotte (48) ist.

7. Vorrichtung nach einem der Ansprüche 1 bis 6, **gekennzeichnet durch** einen Schwenkwinkel (w) des Anschlusskörpers (60) von etwa 60°.

8. Vorrichtung nach einem der Ansprüche 3 bis 7, **dadurch gekennzeichnet, dass** eine Einheit aus der Lagerkalotte (48) des Kugelgelenks (51) und einer Anschlusshülse (46) für den Zurrgurt (16, 16ₐ, 17) mit einer Schutzmanschette (56) versehen ist, die mit einem sich endwärts erweiternden Abschnitt den Schalenrand (54) der dem Anschlusskörper (60) zugeordneten Lagerschale (50) aufsitzt und deren die Lagerkalotte aufnehmende Schalenmündung (52) abdeckt.

9. Vorrichtung nach einem der Ansprüche 2 bis 8, **dadurch gekennzeichnet, dass** das Gelenkteil (38) als starre Laqerplatte des Halses (76) ausgebildet und durch einen Achsstift (36) od. dgl. Element an Lagerlaschen (34) eines Spanngehäuses (28) für den Zurrgurt (16, 16ₐ, 17) angeschlossen ist.

10. Vorrichtung nach Anspruch 9, **dadurch gekennzeichnet, dass** ein Abstand (n) zwischen dem Achsstift (36) und der Drehebene (E) der Lagerkalotte (48) etwa dem doppelten oder dem vierfachen bis fünffachen Abstand (h) der Drehebene von der Unterfläche (13) der angeschlossenen Halteschiene (12) entspricht.

11. Vorrichtung nach Anspruch 10, **dadurch gekennzeichnet, daß** der Abstand (h) der Drehebene (E) von der Unterfläche (13) der angeschlossenen Halteschiene (12) etwa deren doppelten Höhe (e) entspricht, die bevorzugt etwa 10 mm misst.

12. Vorrichtung nach Anspruch 10 oder 11, **gekennzeichnet durch** einen Gesamtabstand (q) des Achsstiftes (36) von einer Unterfläche (13) von etwa 60 bis 70 mm bzw. etwa 110 mm.

13. Vorrichtung nach einem der Ansprüche 1 bis 12, **dadurch gekennzeichnet, daß** am Anschlusskörper (60) stirnseitig ein Sperrbolzen (66) bewegbar lagert, der gegen einen Kraftspeicher (70) aus einer Rastausnehmung (26) der Halteschiene (12) herausnehmbar ausgebildet ist.

14. Vorrichtung nach einem der Ansprüche 4 bis 13, **dadurch gekennzeichnet, dass** am Gelenkteil (38) ein Spanngehäuse (28) vorgesehen und mit dem Zurrgurt (16, 16ₐ, 17) durch ein Kupplungselement (21) verbindbar ausgebildet ist.

## Claims

1. Device for temporary connection of a lashing strap (16, 16a, 17), in particular a strap on a wheelchair, with an anchor point, wherein above a connecting body (60), which can be inserted as lockable and detachable in a holding rail (12), in particular a holding rail (12) having a longitudinal groove (22), is arranged a rotating point (Q) for the lashing strap (16, 16a, 17), adjacent to the holding rail, and the lashing strap is both rotatable about the rotating point in an angle of rotation and swivellable on it in a swivel angle (w), **characterised in that**
a ball joint (51) having the rotation point (Q) is arranged on the connecting body (60) and the ball joint is connected on the one hand to the connecting body and on the other hand to the lashing strap (16, 16a, 17).

2. Device according to claim 1, **characterised in that** the ball joint (51) has a bearing calotte (48) on the belt side, which is held as rotatable in a bearing shell (50) of the connecting body (60).

3. Device according to claim 2, **characterised by** a cylindrical bearing shell (50) projecting from the connecting body (60) with a shell edge (54) surrounding a shell orifice (52) and curved cross-sectionally inwards.

4. Device according to claim 2 or 3, **characterised in that** the bearing calotte (48) of the ball joint (51) is connected to a joint part (38) by a piece of traction rope (42).

5. Device according to claim 2 or 3, **characterised in that** a neck (76) is moulded on to the bearing calotte (48) of the ball joint (51) and the neck is in one piece with a joint part (38) on the belt side.

6. Device according to one of claims 2 to 5, **characterised in that** the rotating point (Q) determining a plane of rotation (E) is the structural centre-point of the bearing calotte (48).

7. Device according to one of claims 1 to 6, **characterised by** a swivel angle (w) of the connecting body (60) of approximately 60°.

8. Device according to one of claims 3 to 7, **characterised in that** a unit consisting of the bearing calotte (48) of the ball joint (51) and a connecting sleeve (46) for the lashing strap (16, 16a, 17) is provided with a protective collar (56), which rests, on top of the shell edge (54) of the bearing shell (50) assigned to the connecting body (60) with a section widening towards the end and covers its shell orifice (52) accommodating the bearing calotte.

9. Device according to one of claims 2 to 8, **characterised in that** the joint part (38) is constructed as a rigid bearing plate of the neck (76) and is connected to bearing brackets (34) of a clamping housing (28) for the lashing strap (16, 16a, 17) by an axial pin (36) or similar element.

10. Device according to claim 9, **characterised in that** a distance (n) between the axial pin (36) and the plane of rotation (E) of the bearing calotte (48) corresponds to approximately double or four to five times the distance (h) of the plane of rotation from the underside (13) of the connected holding rail (12).

11. Device according to claim 10, **characterised in that** the distance (h) of the plane of rotation (E) from the under-side (13) of the connected holding rail (12) corresponds to approximately twice its height (e), which preferably measures approximately 10 mm.

12. Device according to claim 10 or 11, **characterised by** a total distance (q) of the axial pin (36) from an under-side (13) of approximately 60 to 70 mm or approximately 110 mm.

13. Device according to one of claims 1 to 12, **characterised in that** on the front of the connecting body (60) a locking pin (66) is positioned as mobile, constructed as removable from a catch recess (26) of the holding rail (12) against an energy accumulator (70).

14. Device according to one of claims 4 to 13, **characterised in that** on the joint part (38) a clamping housing (28) is provided, constructed as connectable to the lashing strap (16, 16a, 17) by a coupling element (21).

## Revendications

1. Dispositif pour relier temporairement une sangle d'arrimage (16, 16ₐ, 17), en particulier une sangle sur un fauteuil roulant, à un point d'ancrage, de telle sorte qu'au-dessus d'un corps de raccordement (60) pouvant être introduit dans un rail de maintien (12), en particulier dans un rail de maintien (12) qui présente une rainure longitudinale (22), de façon à pouvoir y être verrouillé et déverrouillé, soit disposé un point de rotation (Q) pour la sangle d'arrimage (16, 16ₐ, 17), voisin du rail de maintien, la sangle pouvant aussi bien tourner d'un angle de rotation autour du point de rotation que basculer sur lui selon un angle de basculement (w),
**caractérisé en ce que**
sur le corps de raccordement (60) est disposée une rotule (51) qui présente le point de rotation (Q), et **en ce que** celle-ci est reliée d'un côté au corps de raccordement et de l'autre côté à la sangle d'arrimage (16, 16ₐ, 17).

2. Dispositif selon la revendication 1, **caractérisé en ce que** la rotule (51) présente du côté de la sangle une calotte de palier (48), qui est montée tournante dans une cuvette de palier (50) du corps de raccordement (60).

3. Dispositif selon la revendication 2, **caractérisé par** une cuvette de palier (50) cylindrique surmontant le corps de raccordement (60), avec un rebord de cuvette (54) incurvé à l'intérieur sur sa section, entourant une embouchure de cuvette (52).

4. Dispositif selon la revendication 2 ou 3, **caractérisé en ce que** la calotte de palier (48) de la rotule (51) est reliée à une pièce d'articulation (38) par un tronçon de câble de traction (42).

5. Dispositif selon la revendication 2 ou 3, **caractérisé en ce que** sur la calotte de palier (48) de la rotule (51) est façonné un col (76), et **en ce que** celui-ci est d'une pièce avec une pièce d'articulation côté sangle (38).

6. Dispositif selon une des revendications 2 à 5, **caractérisé en ce que** le point de rotation (Q) qui détermine un plan de rotation (E) est le centre par construction de la calotte de palier (48).

7. Dispositif selon une des revendications 1 à 6, **caractérisé par** un angle de basculement (w) d'environ 60° du corps de raccordement (60).

8. Dispositif selon une des revendications 3 à 7, **caractérisé en ce qu'**une unité constituée de la calotte de palier (48) de la rotule (51) et d'une douille de raccordement (46) pour la sangle d'arrimage (16, 16ₐ, 17) est dotée d'un manchon de protection (56) qui, avec une section qui s'évase à l'extrémité, coiffe le rebord de cuvette (54) de la cuvette de palier (50) affectée au corps de raccordement (60), et qui en recouvre l'embouchure de cuvette (52) qui reçoit la calotte de palier.

9. Dispositif selon une des revendications 2 à 8, **caractérisé en ce que** la pièce d'articulation (38) est configurée comme plaque de palier rigide du col (76) et est raccordée par une goupille d'axe (36) ou un élément similaire à la patte de palier (34) d'un boîtier de tension (28) pour la sangle d'arrimage (16, 16ₐ, 17).

10. Dispositif selon la revendication 9, **caractérisé en ce qu'**une distance (n) entre la goupille d'axe (36) et le plan de rotation (E) de la calotte de palier (48) correspond environ à deux ou quatre à cinq fois la distance (h) du plan de rotation à la surface de dessous (13) du rail de maintien (12) raccordé.

11. Dispositif selon la revendication 10, **caractérisé en ce que** la distance (h) du plan de rotation (E) à la surface de dessous (13) du rail de maintien (12) raccordé correspond à peu près au double de sa hauteur (e), laquelle mesure de préférence environ 10 mm.

12. Dispositif selon la revendication 10 ou 11, **caractérisé par** une distance totale (q) d'environ 60 à 70 mm, respectivement d'environ 110 mm, entre la goupille d'axe (36) et une surface de dessous (13).

13. Dispositif selon une des revendications 1 à 12, **caractérisé en ce que**, sur le côté du corps de raccordement (60) côté frontal, un axe de blocage (66) est monté mobile, qui est configuré extractible depuis un évidement d'encliquetage (26) à l'encontre d'un accumulateur élastique (70).

14. Dispositif selon une des revendications 4 à 13, **caractérisé en ce qu'**un boîtier de tension (28) est prévu sur la pièce d'articulation (38), et est configuré pour pouvoir être relié à la sangle d'arrimage (16, 16ₐ, 17) par un élément d'accouplement (21).
